# EUROPEAN PATENT APPLICATION

(11) **EP 1 857 807 A2**
(43) Date of publication of application: **21.11.2007**
(21) Application number: 07397016.2
(22) Date of filing: 16.05.2007
(51) Int. Cl.: G01N 21/25, G01N 21/64, G02B 27/09

(54) **Arrangement and method for illuminating an object**

(30) Priority: 19.05.2006 FI 20060495
(71) Applicant: WALLAC OY, 20101 Turku (FI)
(72) Inventor: Kuusisto, Ari, 20460, Turku (FI)
(74) Representative: Kupiainen, Juhani Kalervo

(57) **Abstract**

The present invention relates generally to the field of biochemical laboratory instrumentation for different applications of measuring properties of samples on e.g. microtitration plates and corresponding sample supports. More particularly the invention relates to achieving more efficient illumination for activating a sample in measuring e.g. fluorescence. The object of the invention is achieved by providing an illumination arrangement in an optical measurement instrumentation which comprises at least one cavity (285) which has walls with reflective inner surfaces. The light beams for the excitation of samples are guided through the cavity. With such a cavity it is possible to collect the radiation of the light source efficiently and guide the light into the sample (202) with very small attenuation. The reflections from the cavity walls significantly improve the evenness of the radiation. This effect is can be further increased by providing an uneven inner surface of the cavity walls. It is also possible to collimate the light by using a cavity which has an increasing width/cross-section (286, 287) in the advancing direction of the light.

## Description

### Background of the invention

The present invention relates generally to the field of biochemical laboratory instrumentation for different applications of measuring properties of samples on e.g. microtitration plates and corresponding sample supports. More particularly the invention relates to achieving more efficient illumination for activating a sample in measuring e.g. fluorescence.

The routine work and also the research work in analytical biochemical laboratories and in clinical laboratories is often based on different tags or labels coupled on macromolecules under inspection. The typical labels used are different radioactive isotopes, enzymes, different fluorescent molecules and e.g. fluorescent chelates of rare earth metals.

The detection of enzyme labels can be performed by utilizing its natural biochemical function, i.e. to alter the physical properties of molecules. In enzyme immunoassays colourless substances are catalysed by enzymes into colourful substances or non-fluorescent substances are catalysed into fluorescent substances.

The colourful substances are measured with absorption, i.e. photometric measurement. In the photometric measurement the intensity of filtered and stabilized beam is first measured without any sample and then the sample inside one plate is measured. The absorbance i.e. the absorption values are then calculated.

The fluorescent measurement is generally used for measuring quantities of fluorescent label substance in a sample. The most photoluminescence labels are based on molecular photoluminescence process. In this process optical radiation is absorbed by the ground state of a molecule. Due to the absorption of energy the quantum molecule rises into higher excited state. After the fast vibrational relaxation the molecule returns back to its ground state and the excess energy is released as an optical quantum.

Further, there is an analysing method called Amplified Luminescent Proximity Homogeneous Assay or AlphaScreen™. The function of the AlphaScreen method is based on the use of small beads that attach to the molecules under study. There are two types of beads that are coated with a material acting either as a donor or acceptor of singlet-state oxygen. The measurement starts, when the liquid sample is activated by illuminating by light with a wavelength of 680 nm. After this the material in the donor bead converts ambient oxygen into singlet-state oxygen. The single-state molecules have a short lifetime and they can reach only about a 200 nm distance by diffusion in the liquid. If the chemical reaction in question has taken place, both the donor and acceptor beads are bound to the same molecule and so they are close to each other. In this case the singlet-state oxygen may reach the acceptor bead where a series of reactions is started. As the last phase of the reaction the coating material of the acceptor beads emits photons in the 500-700 nm range. If the chemical reaction has not taken place the singlet-state oxygen cannot reach the acceptor bead and the emission light is not detected. By measuring the intensity of light it is possible to conclude the efficiency of the chemical reaction.

The typical instruments in analytical chemical research laboratories are the different spectroscopic instruments. Many of them are utilizing optical region of electromagnetic spectrum. These instruments comprise usually one or two wavelength dispersion devices, such as monochromators. The dispersion devices make them capable to perform photometric, photoluminescence and chemiluminescense measurements throughout the optical spectrum.

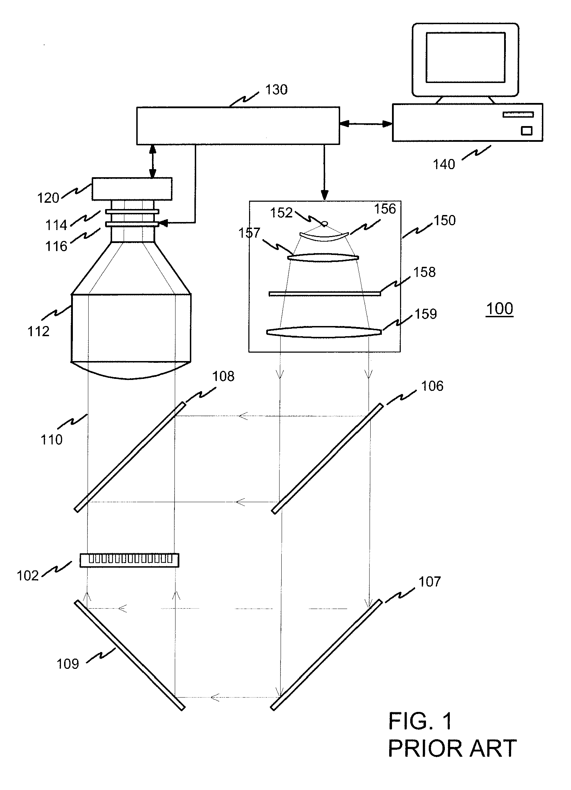

In the measurement instruments many different types of sample plates are used. A sample plate may typically include 96 - 1536 sample wells. The measurement instruments may perform the optical measurements successively for each sample. However, when large numbers of measurements need to be performed it is possible to use a measuring instrument where measurements are made simultaneously from all samples of the plate. In such equipment the samples are activated by guiding the radiation from the illumination source to all samples of the plate simultaneously. The detection is performed with an image detector, such as CCD (Charge Coupled Device), which produces an image that corresponds to the emission radiation received from each location of the sample plate. Figure 1 illustrates basic parts of a prior art optical measurement equipment 100 where samples of a whole plate are measured simultaneously. The samples to be measured are inserted onto a well plate 102. The samples are activated with radiation from a lamp unit 150. The lamp unit 150 comprises a light source 152 such as a flash lamp. Light beams from the lamp are collected with lenses 156, 157 and 159 and directed towards the mirror 106. If an excitation filter 158 is needed, it can be located between the lenses. The activation radiation is further reflected by the mirror 106 and by a beam-slitter mirror 108 onto the well plate 102. If the activation is made from below the samples, the mirror 106 is turned away from the light path. Thus the light is directed by mirrors 107 and 109 to the sample. The lamp unit 150 is controlled by a controller 130 to give radiation with a determined intensity and time period.

After the activation of the sample, the emission radiation from the samples is led to a CCD unit 120. A lens system 112 creates an image of the samples onto a CCD screen. The exposure period is controlled with a shutter 116. The emission radiation is further filtered with an emission filter 114 in order to select the determined wavelength of radiation for the measurement. The lamp unit 150, the shutter 116 and the CCD unit 120 are also controlled with the control unit 130. The measurement process is selected and further controlled by a computer unit 140. The computer unit also processes the output data of the measurements to achieve radiation intensity results for each sample.

In order to achieve a sufficient degree of excitation within a sample it is necessary to have a certain minimum intensity of radiation. The amount of emission in fluorescence measurement can be increased by increasing the intensity of excitation radiation. When all samples are simultaneously activated, high intensity of illumination radiation is required for the large measurement area. Therefore there is a large requirement to increase the radiation intensities available for the excitation of samples.

One way to increase the illumination intensity is increasing the power of the light source, but providing light sources of higher power would require special, complicated technology. Patent document US 6 377 346 describes a system for measuring samples where the illumination is performed using several light sources such as flash lamps. The light sources are controlled to give light pulses successively, and radiation from each light source is directed to the sample. With this arrangement it is possible to achieve higher radiation intensity for the measurements. However, this solution does not increase the efficiency of the illumination, i.e. the amount of radiation vs. the amount of used power. Thus the requirement of input power as well as the generation of heat increases correspondingly. There also exist practical limits for the maximum number of light sources that can be used in the arrangement of successive illumination.

In order to achieve good efficiency it would therefore be important to collect and guide most of the generated radiation into the sample(s). A traditional way of collecting the light from a source is to use lenses of high numerical aperture (N.A.) to collect light emitted by a lamp. Unfortunately only 50 % of the light is emitted to the front side of the lens and so the theoretical maximum of the light collecting efficiency is 50 %. In practice the efficiency is much worse. A lens with N.A. of 0.75 collects only 17 % of all the light emitted by the lamp.

According to one prior art solution to increase the efficiency of excitation optics a mirror is added at the back side of the lamp to direct further light towards the lenses. This could almost double the efficiency of the excitation optics. Still in the above mentioned case of the collecting lens of 0.75 N.A. would lead to only 34 % collection efficiency.

A part of the collected light is further lost due to absorption and reflection losses in the lens material and surfaces. In practice even good excitation optics can direct only 5 - 15 % of the total light energy onto the sample.

A further requirement for the excitation of samples is achieving an even distribution of radiation within the area to be measured. This is also an especially challenging requirement in such measuring equipment where the samples are measured from the whole plate.

One problem related to the prior art solutions is that the excitation light does not fall evenly on the sample, but instead the central region of the sample gets more light than the edges. This means that the sample is excited more strongly in the center and so the emission signal needs to be corrected against this uneven illumination. This also means that there is a different detection limit in different locations of the measurement area. This difference in detection limit cannot be corrected. Therefore it would be important to improve the evenness of the illumination from what is achieved with normal, prior art lens optics.

### Summary of the invention

An object of the present invention is to provide an optical instrument for laboratory measurements, wherein the described disadvantages of the prior art are avoided or reduced. The object of the invention is therefore to achieve a measurement instrument with efficient and even illumination for the measurement of samples.

The object of the invention is achieved by providing an illumination arrangement in an optical measurement instrumentation which comprises at least one cavity which has side walls with reflective inner surfaces. The light beams for the excitation are guided through the cavity. With such a cavity it is possible to collect the radiation of the light source efficiently and guide the light into the sample with very small attenuation. The reflections from the cavity walls significantly improve the evenness of the radiation. This effect can be further increased by providing an uneven inner surface of the cavity walls. The light is also collimated by using a cavity which has an increasing width/cross-section in the direction of the light. In order to achieve these advantages it is useful that the length of the cavity is higher than the width of the cavity.

An arrangement according to the present invention for illuminating a sample in an optical measurement instrument for measuring samples, the arrangement comprising
- a light source, and
- means for guiding a light beam from the light source to a sample via a path,
   is characterized in that
- the arrangement comprises at least one cavity confined by at least one wall,
- the inner surface of the cavity wall is reflective for said light,
- at least a part of said path of the light beam is within said cavity,
- the length of the cavity in the average direction of the path of the light beam is higher than the width of the cavity, wherein the direction of the width is perpendicular to the direction of the length, and
- the width of the cavity increases in the main advancing direction of the light.
   A method according to the present invention for illuminating a sample in an optical measurement instrument for measuring samples, the method comprising
- producing a light beam, and
- guiding the light beam from to a sample via a path,
   is characterized in that the light beam is guided via a cavity confined by at least one side wall, wherein
- the light is reflected at the inner surface of the cavity side wall,
- the length of the cavity in the average direction of the path of the light beam is higher than the width of the cavity, wherein the direction of the width is perpendicular to the direction of the length, and
- the width of the cavity increases in the main advancing direction of the light.

Some preferred embodiments are described in the dependent claims.

In this patent application term "light" or "radiation" means any light within infrared light, visible light or ultraviolet light spectrum. These terms are not used to mean other types of radiation.

In this patent application term "cavity" means a space confined by side wall(s). The cavity has at least one open end.

In this patent application term "average direction of light in a cavity" means a resultant line of the components of a light beam in a cavity. "The main direction of a light beam" means a resultant direction in which the components of a light beam advance in a cavity.

### Brief description of the drawings

The described and other advantages of the invention will become apparent from the following detailed description and by referring to the drawings where:
- Fig. 1: is a schematic block diagram of a prior art measurement instrument where all samples on a plate are measured simultaneously,
- Fig. 2a: illustrates an illumination source with a cavity according to the invention,
- Fig. 2b: illustrates an exemplary form of the inner surface of a cavity wall,
- Fig. 3: is a schematic block diagram of an exemplary measurement instrument with an illumination arrangement according to the present invention.
- Fig. 4: is a schematic block diagram of another exemplary illumination arrangement according to the present invention.

### Detailed description of the drawings

Figure 1 was already explained in the description of the prior art.

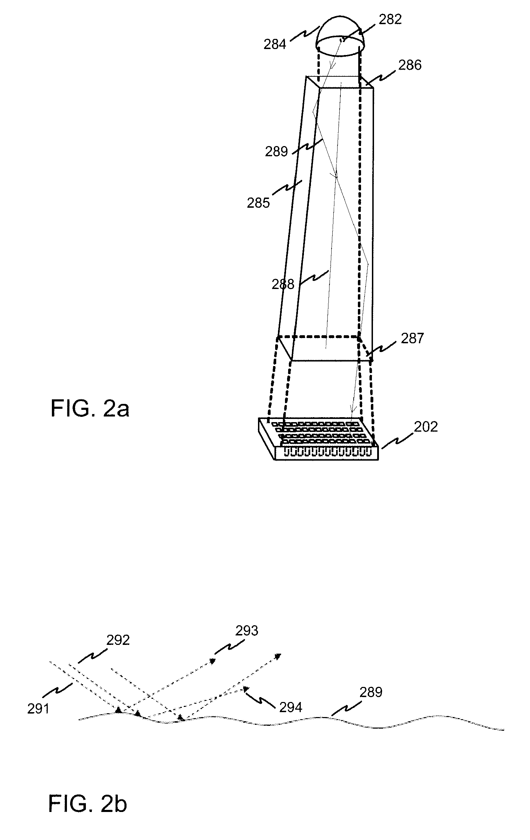

Figure 2a illustrates an exemplary illumination arrangement according to the invention. The arrangement comprises a light source 282, such as a flash lamp. It also comprises a cavity tube 285 with side walls. The front opening 286 of the cavity tube collects light beams from the front area of the light source 282. There is also a reflector 284 which reflects the light beams that enter to the back side of the light source. The light beams reflected by the reflector also enter the opening 286 of the cavity tube.

The side walls of the cavity tube have reflecting inner surfaces. The reflectivity of the inner surfaces is preferably very high, i.e. close to 100 % and at least 90 %. The side walls are preferably reflective in their substantially whole inner surface. Thus the light beams collected from the opening 286 into the tube either travel directly through the tube or are either reflected at the inner surfaces once or several times before reaching the output opening 287 of the tube. Since there is very small attenuation in reflection, the light beams which have entered the front opening 286 will leave the opposite opening 287 of the tube almost without attenuation.

The cross section of the cavity tube preferably increases in the main direction of the light. Thus in the Fig. 2a the area of the front opening 286 is smaller than the output opening 287. Based on this form the light the reflected light beams have a smaller angle in relation to the main axis 288 of the cavity tube than the angle they have before the reflection. Thus the light is collimated in the cavity tube. A path of an exemplary light beam 289 is illustrated in Figure 2a.

It is preferable that the output opening of the cavity tube has approximately same size and form as the measurement area on the sample plate 202 of the equipment. Thus the light is directed evenly throughout the measurement area. On the other hand, it is not preferable that the cross section of the cavity tube would decrease in the main direction of the light because due to the angle of the side walls part of the light could then be reflected back to the light source.

In order to further improve the homogeneity of the illumination on the measurement area, it is preferable to have an uneven inner surface at the side walls of the cavity tube. Figure 2b describes an inner surface 289 which is made into a wave form. Based on the uneven surface the light beams have different reflection angles depending on the location at the side wall where they are reflected. For example, before the reflection light beams 291 and 292 have a same angle in relation to the main axis of the cavity tube. But due to a different location of reflection, the corresponding reflected light beams 293 and 294 have different angles in relation to the main axis of the cavity tube. Based on the uneven surface of the inner surface the homogeneity of the radiation is significantly improved within the tube. The uneven form of the inner surface may be regular, such as a wave form, or irregular. However, the surface should not have any points with such angles where the light beam would be reflected back towards the light source.

It is possible to include a filter or other optical components between the light source and the front opening of the cavity tube. It is also possible to integrate the back reflector and the cavity tube into a single part and thus avoid an intermediate area where some of the light can escape to the surroundings. The tube can be produced of many alternative materials, such as plastic or metal. The reflecting inner surface is preferably achieved by coating.

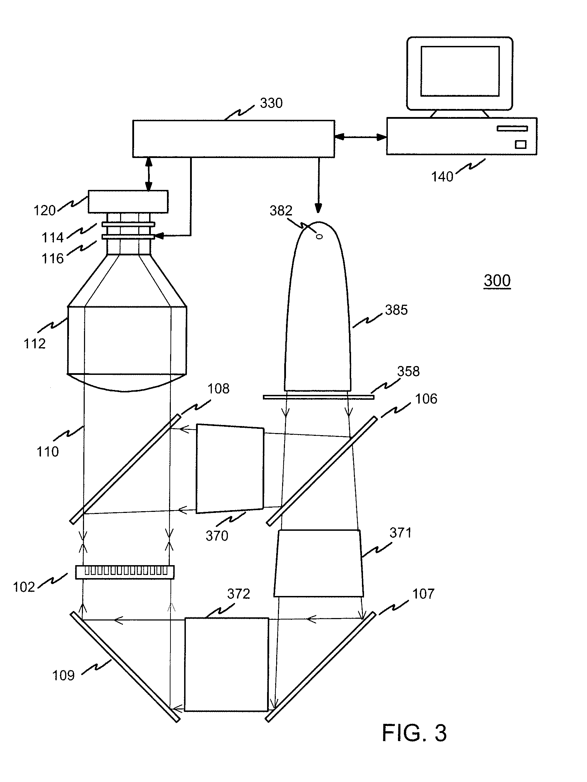

Figure 3 illustrates exemplary optical measurement equipment according to the present invention. The equipment has a light source 382 inside a cavity 385, and the cavity includes both the back reflection part and the front tube part integrated as a single cavity. The cavity is open at its end opposite to the light source. The cavity 385 has e.g. parabolic-formed axial section and rectangular-formed cross section.

The collimated light received from the opening is reflected by a first mirror 106 and thus directed into a second cavity tube 370. The light is further collimated and homogenized within the cavity tube. The light received from the cavity tube 370 is directed to the sample plate 102 via a beam splitter 108. The sample plate 102 is preferably a microtitration plate. There may also be an optical excitation filter 358 between the cavity 385 and the mirror 106.

If the sample is excited from below the sample plate the mirror 106 is turned away from the light path. The excitation light thus enters the sample plate via a third cavity tube 371, mirror 107, a fourth cavity tube 372 and mirror 109. The cavity tubes 371 and 372 also collimate and homogenize the light before entering the measurement area. The cavity tube 371 has its side walls in a slight angle, whereas the cavity tube 372 has straight side walls.

Figures 2a and 3 show cavities which have straight middle lines or main axis. However, it would also be possible to have bends in the cavity tube. In Figure 3, it would be possible to have one bended cavity tube instead of separate cavity tubes 371 and 372 and separate mirrors 107 and 109. By using such an integrated, bent cavity tube it would be possible to avoid any light leakages which may occur between the cavity tubes and the mirrors in the arrangement of Figure 3.

In order to further homogenize the light distribution, it is possible to use mirrors with uneven surface. In Figure 3, mirrors 106, 107 and 109 could be such mirrors. Instead of plane mirrors, it would also be possible to use mirrors of other form, such as convex or aspheric mirrors. This way the light can be further homogenized.
The detection part of the equipment of Figure 3 is similar to the equipment illustrated in Figure 1.

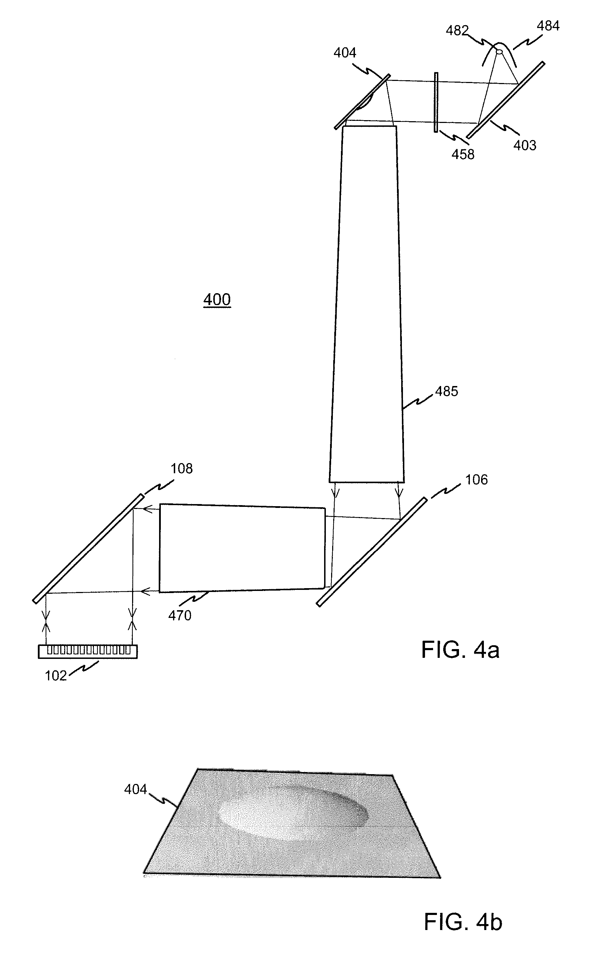

Figure 4a illustrates a further exemplary embodiment of an illumination arrangement according to the present invention. Light from a light source 482 is directed via a mirror 403 through a filter 458 to a second mirror 404. The second mirror reflects the light into a long cavity pipe 485. The second mirror 404 preferably has an uneven surface for homogenizing the light. The mirror has a convex, ball-surface-shaped area in the middle of the mirror, which further makes the distribution of light more uneven. A perspective view of the mirror 404 is illustrated in Figure 4b.

The light which has been collimated and homogenized within the cavity pipe is further reflected with a mirror 106 and led to a second cavity pipe 470. The light is then directed to a microtitration plate 102 via a beam splitter 108. In the arrangement of Figure 4, the light beams have a long path inside the cavity pipes, and therefore the collimating effect and the homogenizing effect of the cavity pipes is high.

It is also possible to use more than one light source. Patent document US 6 377 346 B1 discloses suitable arrangements for collecting light from several light sources. In an arrangement according to the present invention the light from the several light sources would be directed to the sample(s) via a cavity.

In this patent specification the structure of the components in an optical measurement instrument is not described in more detail as they can be implemented using the description above and the general knowledge of a person skilled in the art.

An optical instrument includes control means for performing the optical measurement process. The control of the measuring process in an optical measurement instrument generally takes place in an arrangement of processing capacity in the form of microprocessor(s) and memory in the form of memory circuits. Such arrangements are known as such from the technology of analyzers and relating equipment. To convert a known optical instrument into equipment according to the invention it may be necessary, in addition to the hardware modifications, to store into the memory means a set of machine-readable instructions that instruct the microprocessor(s) to perform the control of the illumination source, detection means etc. according to the properties of the inventive illumination arrangement and method described above. Composing and storing into memory of such instructions involves known technology which, when combined with the teachings of this patent application, is within the capabilities of a person skilled in the art.

Above, an embodiment of the solution according to the invention has been described. The principle according to the invention can naturally be modified within the frame of the scope defined by the claims, for example, by modification of the details of the implementation and ranges of use.

For example, although the described embodiment of the invention utilizes the simultaneous measurement of all samples of a sample plate, it is also possible to use the inventive illumination in equipment where only part of the samples or only one sample on the plate is measured at a time.

Although the invention is described with an arrangement where the light source and the detector are located on the bottom measurement head, there is no reason why their location on the top measurement head should not work. It is also possible to use illumination from above and detection from below the sample or vice versa.

It is also possible to use cavity tubes of many various forms, including rectangular, circular and elliptical cross section forms. Although the described embodiments had tubes with a size of cross section increasing towards the sample, it would also be possible to use a cavity tube with substantially straight side walls.

Also, although the invention has been described with reference to the various microtitration plates it is equally applicable to any form of sample matrixes.

## Claims

**1.** An arrangement for illuminating a sample (102) in an optical measurement instrument for measuring samples, the arrangement comprising
- a light source (382), and
- means (106, 108, 385) for guiding a light beam from the light source to a sample via a path,
**characterized in that**
- the arrangement comprises at least one cavity (385, 370, 371, 372) confined by at least one side wall,
- the inner surface of the cavity side wall is reflective for said light,
- at least a part of said path of the light beam is within said cavity,
- the length of the cavity in the average direction of the path of the light beam is higher than the width of the cavity, wherein the direction of the width is perpendicular to the direction of the length, and
- the width of the cavity increases in the main advancing direction of the light.

**2.** An arrangement according to claim 1, **characterized in that** the means for guiding a light beam to a sample are arranged to provide simultaneous illumination to all samples on a sample plate.

**3.** An arrangement according to claim 1, **characterized in that** the measurement instrument is for measuring samples on a microtitration plate.

**4.** An arrangement according to claim 1, **characterized in that** a cross section of the cavity has a similar form as the measurement area of the measurement instrument.

**5.** An arrangement according to claim 1, **characterized in that** the middle line of a cavity is straight.

**6.** An arrangement according to claim 1, **characterized in that** the middle line of a cavity includes a bend.

**7.** An arrangement according to claim 1, **characterized in that** a cavity wall has an uneven inner surface for providing location dependent reflection angles.

**8.** An arrangement according to claim 1, **characterized in that** it has a mirror with an uneven inner surface for providing location dependent reflection angles.

**9.** An arrangement according to claim 1, **characterized in that** it comprises at least two cavities within the path of the light beam.

**10.** An arrangement according to claim 9, **characterized in** there is a mounting for an optical filter and/or a mirror between the at least two cavities.

**12.** An arrangement according to claim 1, **characterized in that** at least a half of the path of the light beam is within at least one cavity.

**13.** An arrangement according to claim 1, **characterized in that** it comprises at least two light sources and means for directing light from the at least two light sources into the cavity.

**14.** A method for illuminating a sample in an optical measurement instrument for measuring samples, the method comprising
- producing a light beam, and
- guiding the light beam from to a sample via a path,
**characterized in that** the light beam is guided via a cavity confined by at least one side wall, wherein
- the light is reflected at the inner surface of the cavity side wall,
- the length of the cavity in the average direction of the path of the light beam is higher than the width of the cavity, wherein the direction of the width is perpendicular to the direction of the length, and
- the width of the cavity increases in the main advancing direction of the light.
